# EUROPÄISCHE PATENTSCHRIFT

(11) **EP 1 452 544 B1**
(45) Veröffentlichungstag und Bekanntmachung des Hinweises auf die Patenterteilung: **30.05.2007**
(21) Anmeldenummer: 04003373.0
(22) Anmeldetag: 13.02.2004
(51) Int. Cl.: C08B 11/20, C08L 1/28

(54) **Verfahren zur Herstellung von wasserdispergierbaren Celluloseether mit vermindertem Glyoxalgehalt**
Process for making water dispersible celluloseethers having a reduced amount of free glyoxal
Procédé de préparation d'éthers de cellulose dispersibles dans l'eau et ayant un taux en glyoxal libre réduit

(30) Priorität: 26.02.2003 DE 10308109
(43) Veröffentlichungstag der Anmeldung: 01.09.2004
(73) Patentinhaber: Wolff Cellulosics GmbH & Co.KG, 29656 Walsrode (DE)
(72) Erfinder: Brackhagen, Meinolf, Dr., 29664 Walsrode (DE); Schlesiger, Hartwig Dr., 29683 Bad Fallingbostel (DE)
(74) Vertreter: Marx, Thiemo Patrick

(56) Entgegenhaltungen:
- WO-A-03/011960
- GB-A- 1 465 934
- US-A- 4 400 502

## Beschreibung

Die vorliegende Erfindung betrifft ein Verfahren zur Herstellung von glyoxalvernetzten Polysaccharidderivaten, wie z.B. Cellulose-ethern, mit verminderten Gehalt an ungebundenem Glyoxal.

Bei einer Vielzahl von technischen Verfahren ist es notwendig, mehrere Komponenten in fester oder flüssiger Form in Anwesenheit von Polysaccharidderivaten, wie z.B. Celluloseethern zu lösen, zu dispergieren oder zu emulgieren.

Ein nicht behandeltes Polysaccharidderivat, wie z.B. ein Celluloseether ist jedoch meist nur unter hohem Aufwand zu lösen, zu dispergieren oder zu emulgieren, da sich beim Einbringen in eine wässrige oder wasserhaltige Lösung auf der Oberfläche der Polymer-Teilchen eine Gelschicht bildet, durch die das Wasser nur langsam ins innere des Polymers vordringen kann. Zudem neigen die angequollenen, mit einer Gelschicht überzogenen Teilchen zur Agglomerierung, so dass sich Klumpen bilden und die homogene Verteilung der übrigen Komponenten nur durch zeit- und energieintensive Mischvorgänge ermöglicht wird.

Die Aufgabe, Celluloseether klumpenfrei zu lösen, zu dispergieren oder zu emulgieren wird z.B. durch die Behandlung mit Dialdehyden, wie z.B. Glyoxal, gelöst. Beispiele für Verfahren, die eine verbesserte Löslichkeit durch die Verwendung von Dialdehyden erreichen, sind US-A-2 879 268, US-A-3 297 583, DE-AS-1 719 445 bzw. DE-OS-1 518 213 zu entnehmen. Andere Polysaccharide können ebenfalls nach Behandlung mit Glyoxal einfacher in Lösung gebracht werden, z.B. Xanthangummi (Beschrieben in der US-A-4 041 234).

Bei Bedarf kann mit Glyoxal eine um einige Minuten verzögerte Löslichkeit eingestellt werden: Bei Verwendung ausreichend großer Mengen des Dialdehydes ist der behandelte Celluloseether zunächst in Wasser unlöslich und löst sich erst nach einiger Zeit klumpenfrei auf. In dieser Zeit können weitere Komponenten hinzugegeben werden, so dass nach der vollständigen Lösung des Celluloseethers eine homogene Lösung, Dispersion oder Emulsion vorliegt. Der Lösungsvorgang kann durch die Erhöhung des pH-Wertes beschleunigt werden ("Cellulose Ethers", Kapitel 3.2.5, Ullmann's Encyclopedia of Industrial Chemistry, Wiley-VCH Verlag GmbH, Weinheim, Germany).

Nach dem in US-A-3 356 519 beschriebenen Verfahren werden schwache Basen, z.B. Natriumtetraborat als Additiv zu glyoxalvernetzten Celluloseethern gegeben, um den pH-Wert der Polymere zu erhöhen und damit die Zeit bis zur vollständigen Lösung dieser Substanzen abzusenken.

Ein solcher Effekt auf die Lösezeit ist aber in dem erfindungsgemäßen Verfahren unerwünscht und kann durch das Zufügen von Säuren unterdrückt werden. In der US-A-3 356 519 werden ausschließlich mit 0,1-0,2 Gew.-% Glyoxal oberflächenbehandelte Celluloseetherpulver oder -granulate erwähnt, während das erfindungsgemäße Verfahren wasserlösliche Polymere betrifft, die mit mehr als 0,2 Gew.-% Glyoxal zur Reaktion gebracht wurden. Im Unterschied zur Lehre der US-A-3 356 519 wurde gefunden, dass die erfindungsgemäß behandelten Polysaccharidderivate sich auch bei dem bevorzugten pH-Wert in der Nähe des Neutralpunktes klumpenfrei in Lösung bringen lassen. Im Gegensatz zur US-A- 3 356 519 wird in dem erfindungsgemäßen Verfahren das Natriumtetraborat nicht in fester Form nach der Mahlung des Celluloseethers zugegeben, sondern ein wasserlösliches Borat in gelöster Form, bevorzugt vor der Mahlung, so dass eine innige Vermischung der Methylcellulose mit dem wasserlöslichen Borat erfolgt. Wird nach der Lehre der US-A-3 356 519 (Spalte 2, Zeilen 23 - 26; Beispiel 1) Natriumtetraborat in fester Form zugegeben, so ist eine Wechselwirkung zwischen Glyoxal und Natriumtetraborat, die eine Voraussetzung zur Erzielung der in diesem Patent beschriebenen unerwarteten Effekte ist, nicht möglich. Erfindungsgemäß wird ein wasserlösliches Borat oder ein anderes geeignetes Additiv in Form einer Lösung zu dem Polysaccharidderivat hinzugefügt.

US-A-4 400 502 beschreibt das kontäktieren von anionischen, wasserlöslichen Celluloseethern mit einer Lösung aus Wasser, Glyoxal und Natriumtetraborat in einem Slurrymedium. US-A-4 400 502 erfordert die Anwesenheit eines Nichtlösemittels für das Polysaccharidderivat, ein brennbares und umweltschädliches organisches Lösungsmittel, welches aufwändig aus dem Produkt entfernt und wieder aufbereitet werden muss. Zudem sind relativ große Mengen an Natriumteraborat, nämlich mindestens 50 Gewichtsteile auf 100 Gewichtsteile eingesetztes Glyoxal notwendig. Diesem Patent kann nicht entnommen werden, wie mit alkylgruppenhaltigen Polysaccharidderivaten zu verfahren ist, um den Gehalt an ungebundenem Glyoxal zu vermindern.

Die DE-A-2 535 311 beschreibt ein Verfahren zur Verbesserung der Dispergierbarkeit eines Celluloseethers in wässrigen Flüssigkeiten mit einem pH-Wert größer als 10 durch den Zusatz von Borsäure oder einem wasserlöslichen Borat, zusätzlich kann ein Dialdehyd, z.B. Glyoxal eingesetzt werden. Mit dem dort beschriebenen Verfahren kann eine verzögerte Löslichkeit wahlweise auch ausschließlich mit Natriumtetraborat erzielt werden, während dies bei den erfindungsgemäß verwendeten Polysaccharidderivaten alleine mit einem wasserlöslichen Borat oder Borsäure nicht möglich ist. In dem genannten Patent ist beschrieben, dass die Behandlung des Celluloseäthers mit Borsäure oder Natriumtetraborat in einem nicht-sauren, vorzugsweise alkalischen Medium durchgeführt werden muss, die Einstellung eines pH-Wertes mit einer bzw. mehreren zusätzlichen Komponenten ist jedoch nicht vorgesehen. Überraschenderweise kann nach der vorliegenden Erfindung eine verzögerte Löslichkeit auch bei einer Vermengung des Celluloseethers mit Natriumtetraboratlösung bei einem neutralen pH-Wert erreicht werden.

Der zitierten Literatur kann nicht entnommen werden, wie mit alkylgruppenhaltigen, ggf. in heißem Wasser unlöslichen Polysaccharidderivaten zu verfahren ist, um eine hohe Lösungsverzögerung bei geringem Gehalt an ungebundenem Glyoxal zu erreichen.

Wie viele Verbindungen aus der Klasse des Dialdehyde ist Glyoxal in hohen Mengen gesundheitsschädlich. Ein verminderter Gehalt dieser Verbindung in verzögert löslichen Celluloloseethern ermöglicht daher eine verbesserte Handhabung. Darüber hinaus wäre es wünschenswert, den Anteil an ungebundenem Glyoxal in den erfindungsgemäß hergestellten Produkten so gering zu halten, dass in vielen Fällen die Kennzeichnung dieser Verbindungen mit, z.B. mit Gefahrensymbolen entfallen und die Produkte wegen ihrer verbesserten Umweltfreundlichkeit erfolgreicher vermarktet werden können. Keine der genannten Veröffentlichungen offenbart ein Verfahren zur Einstellung eines verminderten Gehaltes an ungebundenem Glyoxal in glyoxalvernetzten Polysaccharidderivaten.

Der Erfindung lag daher die Aufgabe zu Grunde, den Anteil an ungebundenem Glyoxal in glyoxalbehandelten Polysaccharidderivaten abzusenken.

Überraschenderweise wurde gefunden, dass der Anteil des ungebundenen Glyoxals durch die Zugabe von Additiven - wie z.B. wasserlöslichen Boraten - abgesenkt werden kann, so dass in den so hergestellten Produkten im Vergleich zum Stand der Technik deutlich weniger ungebundenes Glyoxal vorhanden ist. Diese Additive bestehen aus wasserlöslichen Verbindungen, die Elemente der dritten Hauptgruppe des Periodensystems der Elemente enthalten. Aus dieser Gruppe erwiesen sich wasserlösliche Borate und Aluminiumsalze als besonders wirksam. Durch das vorgeschlagene Verfahren kann der Gehalt an ungebundenem Glyoxal im Vergleich zu den nach dem Stand der Technik erhaltenen Verfahren deutlich gesenkt werden. Somit wird ein umweltfreundlicheres und damit besser handhabbares und verkäufliches Produkt erhalten.

Gegenstand der Erfindung sind daher ein Verfahren zur Herstellung glyoxalbehandelter Polysaccharidderivate, bei dem
a) ein Polysaccharidderivat mit einer wässrigen Lösung aus Glyoxal und ein oder mehreren wasserlöslichen Aluminiumsalzen oder eines oder mehrerer wasserlöslicher Borate oder einer Kombination aus einem oder mehreren Aluminiumsalzen und einem oder mehreren wasserlöslichen Boraten versetzt wird, wobei die Lösung zur Einstellung des pH-Wertes noch als Puffersubstanz ein oder mehrere Salze der Citronensäure oder ein oder mehrere Salze der Phosphorsäure enthält,
b) bei einer Temperatur zwischen 20 und 70°C gemischt und anschließend
c) getrocknet wird.

Unter dem Begriff "wasserlösliche Borate" im Sinne dieser Erfindung sollen Alkalimetall- und Ammoniumsalze der Polyborsäuren, die durch die allgemeine Formel Hₙ₋₂BₙO₂ₙ₋₁ gekennzeichnet sind, verstanden werden. Bevorzugt werden Na₂B₄O₇, K₂B₄O₇ und (NH₄)₂B₄O₇ verwendet, die gegebenenfalls Kristallwasser enthalten können. Salze und Ester der Orthoborsäure und Metaborsäure sind weniger geeignet.

Ein hoher Anteil an mit Alkylgruppen derivatisierten Hydroxylgruppen des Polysaccharidderivates erhöht im Allgemeinen den Anteil an ungebundenen, extrahierbaren Glyoxal. Die alkylierten Hydroxylgruppen können nicht mehr mit dem zur reversiblen Vernetzung verwendeten Dialdehyd reagieren und tragen daher zu einer Erhöhung des Anteils an ungebundenem, extrahierbaren Glyoxal bei. Daher besteht bei alkylierter Polysaccharidderivaten ein besonders großer Bedarf, den Gehalt an ungebundenem Glyoxal abzusenken. Die Reaktion zwischen dem Dialdehyd Glyoxal und den Hydroxylgruppen eines Polysaccharides oder Polysachharidderivates ist dem Fachmann als Halbacetal- bzw. Acetalbildung bekannt (F. H. Sangsari, F. Chastrette, M. Chastrette, A. Blanc, G. Mattioda; Recl. Trav. Chim. Pays-Bas 109, Seite 419).

Bevorzugt werden Polysaccharidderivate verwendet, die an einer oder mehreren Hydroxylgruppen Alkylsubstituenten tragen. Alkylsubstituenten sind aus den Elementen Kohlenstoff und Wasserstoff bestehende, lineare, verzweigte oder zyklische Substituenten. Diese Substituenten sind an ein Sauerstoffatom des Polysaccharides entweder direkt oder über eine Anzahl weiterer Atome oder Molekülgruppen gebunden. Bevorzugt beinhalten diese Substituenten von einem bis zu achtzehn Kohlenstoffatome. Besonders bevorzugte Alkylsubstituenten sind Methyl und Ethyl. Der Gesamtsubstitutionsgrad aller Alkylsubstituenten ist im Allgemeinen höher als 1, bevorzugt zwischen 1 und 2 und besonders bevorzugt zwischen 1,3 und 1,7. Gegebenenfalls können weitere Substituenten wie Carboxymethyl, Hydroxyethyl und Hydroxypropyl vorhanden sein. In einer besonders bevorzugten Ausführungsform der Erfindung handelt es sich bei den Polysaccharidderivaten um Celluloseether. Beispiele für solche Celluloseether sind Methylcellulose, Methylhydroxyethylcellulose, Ethylhydroxyethylcellulose, Methylethylcellulose, Methylethylhydroxyethylcellulose, Methylhydroxy-propylcellulose, Methylhydroxyethylhydroxypropylcellulose, Ethylhydroxyethylhydroxypropylcellulose, Methylcarboxymethylcellulose, Ethylcarboxymethylcellulose, Propylcellulose, Isopropylcellulose und Cyclohexylcellulose.

In einer weiteren bevorzugten Ausführungsform dieser Erfindung werden solche Polysaccharidderivate verwendet, die in siedendem Wasser unlöslich sind, unabhängig von der Art der Substituenten. Ein Beispiel für ein solches Polysaccharidderivat ist Hydroxypropylcellulose.

Die Menge an ungebundenem Glyoxal kann durch Extraktion des Celluloseethers mit einem Lösungsmittel nachgewiesen werden. Geeignete Lösungsmittel lösen das ungebundene Glyoxal, aber nicht den zu untersuchenden Celluloseether, also z.B. Toluol, Chloroform, Dichlormethan, Tetrahydrofuran. In dem Extrakt wird das Glyoxal nach einer Derivatisierung photometrisch nachgewiesen.

Analyseverfahren für Glyoxal sind beschrieben: E. Sawicki, T. R. Hauser und R. Wilson, "A Comparison of Methods for Spot Test Detection and Spectrophotometric Determination of Glyoxal", Analytical Chemistry, Band 34 (4), [1964], Seiten 505-508, "Method for the determination of the glyoxal content in cellulose ethers", Cefic, Celulose ether group, September 2002, dépôt legal D/3158/2002/9, www.cefic.be/files/Publications/celluloseether.pdf.

Photometrische Verfahren sind dem Fachmann bekannt und in der Literatur beschrieben, z.B: Lange u. Vejdelek, Photometrische Analyse, Verlag Chemie, Weinheim 1980.

Dem Polysaccharidderivat werden neben Glyoxal mit oder getrennt von den beschriebenen Additiven eine oder mehrere der genannten Puffersubstanzen zugegeben, die den pH-Wert in gewünschter Weise beeinflussen. Auf diese Weise kann vermieden werden, dass sich durch eine hohe Menge eines basischen, Glyoxal-bindenden Additives ein zu hoher pH-Wert einstellt. Ein solcher pH-Wert führt zu einer beschleunigten Lösung des Polysaccharidderivates, die in vielen Anwendungen unerwünscht ist. Ebenfalls kann vermieden werden, dass durch einen zu niedrigen pH-Wert ein Molekulargewichts- und damit Viskositätsabbau eintritt.

Darüber hinaus kann durch die Einstellung des pH-Wertes zur Vernetzung des Celluloseethers eine technische Glyoxallösung verwendet werden, die oftmals Anteile von Glyoxylsäure enthält und somit ohne diese Zusätze zum Viskositätsabbau der Celluloseether und damit zu einer verminderten Lagerstabilität führen würde.

In einer bevorzugten Ausführungsform werden als Puffersubstanzen Citronensäure oder deren Salze in Kombination mit wasserlöslichen Aluminiumsalzen eingesetzt. In einer besonders bevorzugten Ausführungsform wird pro mol des wasserlöslichen Aluminiumsalzes mindestens ein mol tri-Natriumcitrat eingesetzt, so dass das Aluminium-Kation in Lösung vollständig komplexiert wird und nicht mit weiteren z.B. in einer Zubereitung enthaltenen Bestandteilen in unerwünschter Weise wechselwirkt.

In einer weiteren bevorzugten Ausführungsform werden als Puffersubstanzen Phosphorsäure oder deren Salze in Kombination mit wasserlöslichen Boraten eingesetzt, um den gewünschten pH-Wert einzustellen.

Das erfindungsgemäße Verfahren besteht demnach darin, dem Polysaccharidderivat eine wässrige Lösung aus Glyoxal und einem Additiv, bestehend aus einem wasserlöslichen Aluminiumsalz oder einem wasserlöslichen Borat, bevorzugt Natriumtetraborat sowie einer der weiteren Komponente zur Einstellung eines gewünschten pH-Wertes zuzugeben. Das Additiv senkt den Anteil an extrahierbarem, ungebundenem Glyoxal deutlich ab. Falls gewünscht, kann mit der dritten Komponente, die aus einem Gemisch verschiedener Substanzen bestehen kann, der pH-Wert je nach den Erfordernissen der Anwendung eingestellt werden. In den meisten Anwendungen ist ein pH-Wert von 8 oder höher nicht erwünscht, da die Lösungsverzögerung dann zu gering ist, um das Polymer klumpenfrei in Lösung zu bringen. Durch das erfindungsgemäße Verfahren kann dieser Nachteil vermieden werden.

Bevorzugt wird das Glyoxal in Form einer 40 Gewichtsprozentigen wässrigen Lösung eingesetzt.

Bevorzugt werden Glyoxal in Form einer 40 Gewichtsprozentigen wässrigen Lösung, ein oder mehrere wasserlösliche Borate und eine oder mehrere Substanzen zur Einstellung des pH-Wertes in Wasser gelöst und dann dem Polysaccharidderivat zugegeben.

Bevorzugt wird ein nach der Heißwasserwäsche erhaltener wasserfeuchter Filterkuchen mit einem Trockensubstanzgehalt von 40 - 60 % eingesetzt. Dieser Filterkuchen wird bevorzugt mit einer Lösung aus Glyoxal, wasserlöslichem Borat sowie Puffersubstanz und gegebenenfalls Wasser besprüht während er in Bewegung gehalten wird und anschließend getrocknet und gemahlen oder einer Mahltrocknung unerworfen.

In einer weiteren bevorzugten Ausführungsform wird der Filterkuchen mit einer Lösung aus Glyoxal, wasserlöslichem Aluminiumsalz und Puffersubstanz sowie gegebenenfalls Wasser besprüht.

Die zum Filterkuchen gegebene Glyoxalmenge beträgt bevorzugt mindestens 0,4 Gewichtsprozent, bezogen auf die Masse des getrockneten und gemahlenen Polysaccharidderivates, besonders bevorzugt zwischen 0,4 und 1 Gewichtsprozent.

Die Menge an wasserlöslichem Tetraborat oder wasserlöslichem Aluminiumsalz, bezogen auf die trockenen Substanzen, beträgt bevorzugt weniger als 0,5 Gewichtsteile pro 1 Gewichtsteil Glyoxal, besonders bevorzugt zwischen 0,1 und 0,3 Gewichtsteile pro 1 Gewichtsteil Glyoxal.

Die Lösungsverzögerung kann mit einem Rheometer bestimmt werden, das in der Lage ist die Schubspannung in Abhängigkeit von der Zeit zu messen. Die Messung beginnt mit dem Einstreuen des Celluloseethers in das vorgelegte Wasser. Die so erhaltenen Messwerte werden in ein Diagramm eingetragen, so dass eine S-förmige Kurve entsteht, welche die Schubspannung in Abhängigkeit von der Zeit wiedergibt. Durch den Wendepunkt der Kurve wird eine Tangente gelegt, deren Schnittpunkt mit der Zeit-Achse (X-Achse) die Lösungsverzögerung wiedergibt.

### Beispiele

Die Viskositäten wurden bei einer Temperatur von 20°C an einer Lösung von 2 Gew.-% des behandelten lufttrockenen Polysaccharidderivates in destilliertem Wasser bestimmt. Als Messgerät wurde ein Rotovisko VT 550, Hersteller: Fa. Haake, ausgerüstet mit einem Rotor MVII und einem Messbecher MV des gleichen Herstellers, verwendet. Das Schergefälle betrug 2,55 s⁻¹.

Der angegebene pH-Wert wurde an einer Lösung von 2 Gew.-% des behandelten lufttrockenen Polysaccharidderivates in destilliertem Wasser unter Verwendung einer Einstabmesskette elektrometrisch bestimmt.

Glyoxal wurde in Form einer 40 %-igen wässrigen Lösung eingesetzt.

Zur Messung des ungebundenen Glyoxals wurden 200 mg lufttrockener, gemahlener und getrockneter Celluloseether in einer Injektionsflasche mit 10 mL Tetrahydrofuran bei niedriger Drehfrequenz über vier Stunden in einem Überkopfmischer extrahiert. Der so erhaltene Extrakt wurde nach Derivatisierung mit para-Nitrophenylhydrazin unter basischen Bedingungen, wie in E. Sawicki, T. R. Hauser und R. Wilson, "A Comparison of Methods for Spot Test Detection and Spectrophotometric Determination of Glyoxal", Analytical Chemistry, Band 34 (4), [1964], Seiten 505-508 beschrieben, zur photometrischen Analyse des Glyoxals eingesetzt.

Der DS (M) gibt die durchschnittliche Substitution einer Anhydroglucose - Einheit durch MethylSubstituenten an. Substitution durch Reagenzien, die eine weitere Hydroxylgruppe bilden, wird durch den molaren Substitutionsgrad (MS) charakterisiert. Der MS(HE) gibt die durchschnittliche Zahl der Hydroxyethylgruppen pro Anhydroglucose - Einheit wieder und kann, da an jeder Anhydroglucose - Einheit mehr als drei Hydroxyethylgruppen gebunden sein können, größer als drei sein.

Die Bestimmung des DS und MS erfolgt nach der dem Fachmann bekannten Zeisel-Methode, beschrieben z.B. in P. W. Morgan, *Ind. Eng. Chem. Anal. Ed.* **18** (1946) 500 - 504 und R. U. Lemieux, C. B. Purves, *Can. J Res. Sect. B* **25** (1947) 485 - 489.

Die angegebenen Lösungsverzögerungen wurden mit einem Rheometer der Firma Haake (VT 550) bei 23°C in wässriger Lösung, pH 6,6, gemessen.

Die in den Beispielen angegebenen Einsatzmengen an MHEC, Aluminiumsulfat, Magnesiumsulfat, Citronensäure, Natriumtetraborat, di-Natriumhydrogenphosphat und Natriumdihydrogenphosphat beziehen sich auf wasserfreie Trockensubstanz. Verwendet wurde wasserfeuchte Methylhydroxyethylcellulose [MHEC] mit einem Trockensubstanzgehalt von 45 - 55 %, Aluminiumsulfat Hexadecahydrat [Al₂(SO₄)₃ * 16 H₂O], Magnesiumsulfat Heptahydrat [Mg(SO₄) * 7 H₂O], Citronensäuremonohydrat, Natriumtetraborat Decahydrat [Na₂B₄O₇ * 10 H₂O], di-Natriumhydrogenphosphat Dihydrat [Na₂HPO₄ * 2 H₂O] und Natriumdihydrogenphosphat Dihydrat [NaH₂PO₄ * 2 H₂O]. Glyoxal wurde als wässrige Lösung mit einem Glyoxalgehalt von 40 Gewichtsprozent eingesetzt.

Sofern nicht anders angegeben, beziehen sich Angaben zu Gewichtsprozenten auf die Gesamtmenge.

### Beispiel 1

Wasserfeuchte Methylhydroxyethylcellulose (2500 g Trockensubstanz), gekennzeichnet durch einen durchschnittlichen Substitutionsgrad DS (M) von 1,76 (Durchschnittliche Anzahl der Methylgruppen pro Anhydroglucoseeinheit), und einen molaren Substitutionsgrad MS (HE) von 0,32 (Durchschnittliche Zahl der Hydroxyethylgruppen pro Anhydroglucoseeinheit), Viskosität 39000 mPa*s (2 %-ige Lösung in Wasser), wird in einem Mischer vorgelegt und dort mit einer wässrigen Lösung aus Glyoxal, Wasser und Aluminiumsulfat vermengt. Die Lösung enthält zusätzlich einen Citratpuffer, hergestellt aus Citronensäure und Natronlauge. Nach der Zugabe der Reagenzien wird über 90 min. bei einer Innentemperatur von 55°C gemischt.

Anschließend wird die feuchte MHEC in einem Umlufttrockenschrank bei 55°C getrocknet und in einer Labor-Siebkorbmühle mit einem Siebeinsatz der Maschenweite 500 µm gemahlen.

| **Versuch Nr.** | | **1A** | **1B** | **1C** | **1D** |
|---|---|---|---|---|---|
| | | **(Vergleich)** | | | |
| MHEC | g | 2500 | 2500 | 2500 | 2500 |
| Wasser | g | 241,4 | 239,3 | 299,5 | 297,4 |
| Glyoxallösung | | | | | |
| (40 Gew-% in Wasser) | ml | 55 | 55 | 55 | 55 |
| Aluminiumsulfat | g | - | 2,5 | 5,0 | 7,5 |
| Citronensäure | g | - | 1,41 | 2,81 | 4,22 |
| NaOH (ln) | ml | 1,6 | 47,6 | 92,8 | 145,4 |
| Lösungsverzögerung | min | 21 | 20,5 | 20,5 | 17,5 |
| Glyoxal, | | | | | |
| ungebunden | Gew.- % | 0,13 | 0,13 | 0,11 | 0,09 |
| pH-Wert | | 5,5 | 4,8 | 4,6 | 3,6 |

### Beispiel 2

Wasserfeuchte Methylhydroxyethylcellulose (200 g Trockensubstanz), gekennzeichnet durch DS (Methyl) = 1,78 und MS (Hydroxyethyl) = 0,42, Viskosität 3500 mPa*s (2 %-ige Lösung in Wasser), wird mit Wasser, Glyoxal und entweder I) Natriumdihydrogenphosphat oder II) Natriumdihydrogenphosphat und Natriumtetraborat in einer handelsüblichen Küchenmaschine der Fa. Bosch Typ UM4EV2B vermengt, als Rührwerkzeug dient ein im Lieferumfang enthaltener Knethaken. Die Mischzeit beträgt 45 Minuten. Anschließend wird die feuchte MHEC in einem Umlufttrockenschrank bei 55°C getrocknet und in einer Labor-Siebkorbmühle mit einem Siebeinsatz der Maschenweite 500 µm gemahlen.

| **Versuch** | | **2A** | **2B** | **2C** | **2D** |
|---|---|---|---|---|---|
| | | **(Vergleich)** | | **(Vergleich)** | |
| MHEC | g | 200 | 200 | 200 | 200 |
| Wasser | g | 10,2 | 9,7 | 9,3 | 8,8 |
| Natriumtetraborat | g | 0 | 0,6 | 0 | 0,6 |
| NaH₂PO₄ | g | 1,2 | 1,2 | 1,2 | 1,2 |
| Glyoxallösung | | | | | |
| (40 Gew.-% in Wasser) | ml | 4,4 | 4,4 | 5,6 | 5,6 |
| Glyoxal, | | | | | |
| ungebunden | Gew.-% | 0,17 | 0,12 | 0,23 | 0,16 |
| Lösungsverzögerung | min | 15,5 | 12,5 | 17 | 15 |
| pH-Wert | | 5,8 | 7,7 | 5,5 | 7,7 |

### Beispiel 3

Wasserfeuchte Methylhydroxyethylcellulose (200 g Trockensubstanz), gekennzeichnet durch DS (Methyl) = 1,76 und MS (Hydroxyethyl) = 0,32, Viskosität 680 mPa*s (2 %-ige Lösung in Wasser), wird mit Wasser, Glyoxal und entweder I) Natriumdihydrogenphosphat und Natriumtetraborat oder II) Natriumdihydrogenphosphat (Vergleichsprobe) wie in Beispiel 2 beschrieben behandelt, getrocknet und gemahlen.

| **Ansatz-Nr.:** | | **3A** | **3B** |
|---|---|---|---|
| | | | **(Vergleich)** |
| MHEC | g | 200 | 200 |
| Wasser | g | 23,7 | 24,3 |
| Natriumtetraborat | g | 0,6 | - |
| NaH₂PO₄ | g | 1,2 | 1,2 |
| Glyoxal | | | |
| (40 Gew.-% in Wasser) | ml | 5,6 | 5,6 |
| Lösungsverzögerung | min | 13 | 10,5 |
| Glyoxal, | | | |
| ungebunden | Gew.-% | 0,13 | 0,22 |
| pH-Wert | | 7,6 | 6,0 |

### Beispiel 4

Methylhydroxyethylcellulose (200 g Trockensubstanz), gekennzeichenet durch DS (Methyl) = 1,75 und MS (Hydroxyethyl) = 0,32, Viskosität 15000 mPa*s (2 %-ige Lösung in Wasser), wird mit Wasser, Glyoxal und entweder I) Natriumdihydrogenphosphat und Natriumtetraborat oder II) keinen erfindungsgemäßen Additiven, wie in Beispiel 2 beschrieben behandelt, getrocknet und gemahlen.

| **Ansatz-Nr.:** | | **4A.** | **4B** |
|---|---|---|---|
| | | | **(Vergleich)** |
| MHEC | g | 200 | 200 |
| Wasser | g | 32,9 | 33,4 |
| di-Natriumtetraborat | g | 0,6 | --- |
| NaH₂PO₄ | g | 0,6 | --- |
| Glyoxal | | | |
| (40 Gew.-% in Wasser) | ml | 4,4 | 4,4 |
| Lösungsverzögerung | min | 12,5 | 14 |
| Glyoxal, | | | |
| ungebunden | Gew.-% | 0,07 | 0,19 |
| pH-Wert | | 8,1 | 5,3 |

### Beispiel 5

Methylhydroxyethylcellulose (2500 g Trockensubstanz), gekennzeichnet durch DS (Methyl) von 1,57 und MS (HE) von 0,27, Viskosität 30000 mPa*s (2 %-ige Lösung in Wasser), wird in einem Mischer vorgelegt und dort mit Wasser, einem Puffergemisch bestehend aus Natriumdihydrogenphosphat und di-Natriumhydrogenphosphat sowie I) Glyoxal II) Glyoxal und Natriumtetraborat oder III) Natriumtetraborat vermengt. Nach der Zugabe der Reagenzien wird über 90 min. bei einer Innentemperatur von 55°C gemischt.

Anschließend wird die feuchte MHEC in einem Umlufttrockenschrank bei 55°C getrocknet und in einer Labor-Siebkorbmühle mit einem Siebeinsatz der Maschenweite 500 µm gemahlen.

| **Ansatz-Nr.** | | **5A** | **5B** | **5C** |
|---|---|---|---|---|
| | | **(Vergleich)** | | **(Vergleich)** |
| MHEC | g | 2500 | 2500 | 2500 |
| Wasser | g | 420,7 | 414,0 | 455,9 |
| Glyoxal | | | | |
| (40 %-ige Lösung in Wasser) | ml | 55 | 55 | - |
| Na₂HPO₄ | g | 4,1 | 4,1 | 4,1 |
| NaH₂PO₄ | g | 3,4 | 3,4 | 3,4 |
| Natriumtetraborat | g | - | 7,5 | 7,5 |
| Lösungsverzögerung | min | 18 | 15 | - |
| | | | | (klumpt sofort) |
| Glyoxal, | | | | |
| ungebunden | Gew.-% | 0,08 | 0,05 | - |
| pH-Wert | | 6,6 | 8,2 | 8,8 |

### Beispiel 6

Methylhydroxyethylcellulose (2500 g Trockensubstanz), gekennzeichenet durch DS (Methyl) = 1,75 und MS (Hydroxyethyl) = 0,32, Viskosität 20000 mPa*s (2 %-ige Lösung in Wasser), wird mit Wasser, einem Puffergemisch bestehend aus Natriumdihydrogenphosphat und di-Natriumhydrogenphosphat sowie I) keinem zusätzlichen Additiv II) Borsäure oder III) Natriumtetraborat wie in Beispiel 5 beschrieben vermengt, getrocknet und gemahlen. Zum Vergleich wird eine weitere Probe ohne Glyoxal, d.h. nur mit Borsäure und einem Puffergemisch bestehend aus Natriumdihydrogenphosphat und di-Natriumhydrogenphosphat besprüht und getrocknet.

| **Versuch** | | **6A** | **6B** | **6C** | **6D** |
|---|---|---|---|---|---|
| | | **(Vergleich)** | **(Vergleich)** | | **(Vergleich)** |
| MHEC | g | 200 | 200 | 200 | 200 |
| Glyoxal | | | | | - |
| (40 Gew.% in Wasser) | ml | 4,4 | 4,4 | 4,4 | |
| Additiv | | - | Borsäure | Natrium- | Borsäure |
| | | | | tetraborat | |
| Additivmenge | g | 0 | 0,6 | 0,6 | 0,6 |
| Na₂HPO₄ | g | 0,328 | 0,328 | 0,328 | 0,328 |
| NaH₂PO₄ | g | 0,272 | 0,272 | 0,272 | 0,272 |
| Lösungsverzögerung | min | 21,5 | 20,5 | 15,6 | - |
| | | | | | (klumpt sofort) |
| Glyoxal, | | | | | |
| ungebunden | Gew.-% | 0,16 | 0,15 | 0,10 | - |
| pH-Wert | | 6,6 | 7,2 | 8,3 | 7,4 |

## Patentansprüche

1. Verfahren zur Herstellung glyoxalbehandelter Polysaccharidderivate, bei dem
a) ein Polysaccharidderivat mit einer wässrigen Lösung aus Glyoxal und ein oder mehreren wasserlöslichen Aluminiumsalzen oder eines oder mehrerer wasserlöslicher Borate oder einer Kombination aus einem oder mehreren Aluminiumsalzen und einem oder mehreren wasserlöslichen Boraten versetzt wird, wobei die Lösung zur Einstellung des pH-Wertes noch als Puffersubstanz ein oder mehrere Salze der Citronensäure oder ein oder mehrere Salze der Phosphorsäure enthält,
b) bei einer Temperatur zwischen 20 und 70°C gemischt und anschließend
c) getrocknet wird.

2. Verfahren gemäß Anspruch 1, **dadurch gekennzeichnet, dass** das Polysaccharidderivat ein Celluloseether ist.

3. Verfahren gemäß Anspruch 1 oder 2, **dadurch gekennzeichnet, dass** das Polysaccharidderivat aus Methylhydroxyethylcellulose oder Methylhydroxypropylcellulose oder Methylcellulose oder Mischungen dieser Substanzen besteht.

4. Verfahren gemäß einem der Ansprüche 1 bis 3, **dadurch gekennzeichnet, dass** das Polysaccharidderivat in Form eines nach der Heißwasserwäsche erhaltenen Filterkuchens mit einem Trockensubstanzgehalt von 40 bis 60 % eingesetzt wird.

5. Verfahren gemäß Anspruch 4, **dadurch gekennzeichnet, dass** der Filterkuchen mit einer Lösung aus Glyoxal, wasserlöslichem Borat sowie Puffersubstanz und gegebenenfalls Wasser, während er in Bewegung gehalten wird, besprüht und anschließend getrocknet und gemahlen oder einer Mahltrocknung unterworfen wird.

6. Verfahren gemäß Anspruch 5, **dadurch gekennzeichnet, dass** die Menge an Glyoxal mindestens 0,4 Gew.-% bezogen auf die Masse des getrockneten und gemahlenen Polysaccharidderivats beträgt.

## Claims

1. Process for producing glyoxal-treated polysaccharide derivatives in which
a) a polysaccharide derivative is admixed with an aqueous solution of glyoxal and one or more water-soluble aluminium salts or one or more water-soluble borates or a combination of one or more aluminium salts and one or more water-soluble borates, the solution, to set the pH, further containing as buffer substance one or more salts of citric acid or one or more salts of phosphoric acid,
b) mixed at a temperature between 20 and 70°C, and subsequently
c) dried.

2. Process according to Claim 1, **characterized in that** the polysaccharide derivative is a cellulose ether.

3. Process according to Claim 1 or 2, **characterized in that** the polysaccharide derivative consists of methyl hydroxyethylcellulose or methyl hydroxypropylcellulose or methylcellulose or mixtures of these substances.

4. Process according to one of Claims 1 to 3, **characterized in that** the polysaccharide derivative is used in the form of a filter cake obtained after hot water washing having a dry matter content of 40 to 60%.

5. Process according to Claim 4, **characterized in that** the filter cake is sprayed with a solution of glyoxal, water-soluble borate and also buffer substance and if appropriate water while it is kept agitated, and subsequently dried and ground or subjected to milling-drying.

6. Process according to Claim 5, **characterized in that** the amount of glyoxal is at least 0.4% by weight, based on the mass of the dried and ground polysaccharide derivative.

## Revendications

1. Procédé de préparation de dérivés polysaccharidiques traités par du glyoxal, dans lequel
a) un dérivé polysaccharidique est mélangé avec une solution aqueuse de glyoxal et un ou plusieurs sels d'aluminium solubles dans l'eau ou un ou plusieurs borates solubles dans l'eau, ou une association d'un ou de plusieurs sels d'aluminium et d'un ou de plusieurs borates solubles dans l'eau, la solution contenant encore comme substance tampon pour ajuster le pH, un ou plusieurs sels de l'acide citrique ou un ou plusieurs sels de l'acide phosphorique,
b) est mélangé à une température comprise entre 20 et 70 °C et ensuite
c) est séché.

2. Procédé selon la revendication 1, **caractérisé en ce que** le dérivé polysaccharidique est un éther de cellulose.

3. Procédé selon la revendication 1 ou 2, **caractérisé en ce que** le dérivé polysaccharidique est constitué de méthylhydroxyéthylcellulose, de méthylhydroxypropylcellulose, de méthylcellulose ou de mélanges de ces substances.

4. Procédé selon une des revendications 1 à 3, **caractérisé en ce que** le dérivé polysaccharidique est mis en oeuvre sous la forme d'un gâteau de filtration obtenu après lavage à l'eau chaude, présentant une teneur en substance sèche comprise entre 40 et 60 %

5. Procédé selon la revendication 4, **caractérisé en ce que** le gâteau de filtration est pulvérisé, pendant qu'il est maintenu en mouvement, avec une solution de glyoxal, de borate soluble dans l'eau ainsi que d'une substance tampon et le cas échéant de l'eau; il est ensuite séché et moulu ou soumis à un broyage-séchage.

6. Procédé selon la revendication 5, **caractérisé en ce que** la proportion de glyoxal atteint au moins 0,4 % en poids par rapport à la masse du dérivé polysaccharidique séché et moulu.
